# DEMANDE DE BREVET EUROPEEN

(11) **EP 4 477 465 A1**
(43) Date de publication de la demande: **18.12.2024**
(21) Numéro de dépôt: 24179704.2
(22) Date de dépôt: 03.06.2024
(51) Int. Cl.: B60N 2/22, B60N 2/235

(54) **VÉHICULE COMPRENANT UN SIÈGE ARRIÈRE DOTÉ D'UN DOSSIER ORIENTABLE SUIVANT AU MOINS QUATRE POSITIONS**

(30) Priorité: 13.06.2023 FR 2305975
(71) Demandeur: Renault s.a.s, 92100 Boulogne Billancourt (FR)
(72) Inventeur: GRENIER, Laurent, 78280 GUYANCOURT (FR); LEMONNIER, Matthieu, 78280 GUYANCOURT (FR)

(57) **Abrégé**

L'invention concerne un véhicule (1) comprenant un siège arrière (2) doté d'une assise (3) et d'un dossier (4) monté pivotant autour d'un axe de rotation (9).

Selon l'invention, le dossier (4) possède une pièce d'entrainement (17) qui est traversée par l'axe de rotation (9) et comportant une portion périphérique en arc de cercle de laquelle émerge un plot (18), ledit véhicule comprenant deux cames (15, 16) placées l'une à côté de l'autre et possédant chacune au moins deux empreintes creuses, lesdites deux cames (15, 16) étant disposées lune par rapport à l'autre de sorte que les deux empreintes creuses d'une came (15, 16) soient décalées par rapport aux deux empreintes creuses de l'autre came (15, 16), une mise en rotation du dossier (4) entrainant une mise en rotation simultanée de la pièce d'entrainement (17) permettant au plot (18) de venir s'insérer dans une empreinte creuse de l'une desdites deux cames (15, 16), l'insertion dudit plot (17) dans une empreinte creuse de l'une des deux cames (15, 16) bloquant le dossier (4) dans une position correspondant à une inclinaison donnée.

## Description

La présente invention concerne un véhicule comprenant un siège arrière doté d'un dossier orientable suivant au moins quatre positions.

Afin de bien comprendre le positionnement des différentes pièces impliquées dans un véhicule selon l'invention, la description est réalisée en faisant référence à un repère orthonormé direct XYZ dans lequel X est un axe longitudinal avant-arrière du véhicule orienté vers l'arrière, Y est un axe transversal orienté vers la droite du véhicule et Z est un axe vertical dirigé vers le haut.

Un siège arrière de véhicule peut par exemple être constitué d'un siège individuel ou d'une banquette deux ou trois places. Généralement, un coffre arrière est placé derrière ce siège arrière, et dans la continuité de celui-ci. Autrement dit, aucune paroi ni aucun espace d'interposition n'est placé entre ledit siège arrière et ledit coffre arrière.

Actuellement, le dossier des sièges arrière de véhicules, ne peut se positionner que suivant un nombre restreint de positions caractérisées chacune par une inclinaison donnée, uniquement destinées à assurer un certain confort à un passager qui serait assis sur ledit siège. Autrement dit, ces positions de dossier ont pour seul but de plus ou moins incliner le dos du passager qui serait assis sur ledit siège, pour accroitre son confort d'assise.

Ainsi, les constructeurs automobiles, pour des questions de couts et de réglementation, ne proposent que des orientations de dossier comprises entre 20° et 32° d'angle de buste par rapport à un plan vertical et transversal YZ du véhicule, pour les passagers arrière. Puisque chaque cran marquant une position particulière du dossier avec une inclinaison donnée, doit résister aux crash-tests imposés par la réglementation, les constructeurs diminuent le nombre de crans disponibles par l'utilisateur.

Un véhicule selon l'invention comprend au moins un siège arrière doté d'un mécanisme d'orientation du dossier permettant audit dossier d'occuper une pluralité de positions discrètes ayant des inclinaisons variées pour remplir des fonctions différentes, et conçus chacune pour résister au crash-test imposé par la règlementation.

L'invention a pour objet un véhicule comprenant un siège arrière doté d'une assise et d'un dossier monté pivotant autour d'un axe de rotation.

Selon l'invention, le dossier possède une pièce d'entrainement qui est traversé par l'axe de rotation et comportant une portion périphérique en arc de cercle de laquelle émerge un plot, ledit véhicule comprenant deux cames placées l'une à côté de l'autre et possédant chacune au moins deux empreintes creuses, lesdites deux cames étant disposées l'une par rapport à l'autre de sorte que les deux empreintes d'une came soient décalées par rapport aux deux empreintes de l'autre came suivant un axe longitudinal X du véhicule, une mise en rotation du dossier entrainant une mise en rotation simultanée de la pièce d'entrainement permettant au plot de venir s'insérer dans une empreinte creuse de l'une desdites deux cames, l'insertion dudit plot dans une empreinte creuse de l'une des deux cames bloquant le dossier dans une position correspondant à une inclinaison donnée du dossier. Le principe d'un véhicule selon l'invention est de créer au moins quatre crans distincts correspondant aux quatre empreintes creuses des deux cames, permettant de placer le dossier du siège arrière dans au moins quatre positions discrètes, correspondant chacune à une inclinaison donnée dudit dossier. Pour ce faire, un plot solidarisé au dossier peut venir s'insérer dans quatre empreintes creuses de deux cames fixées au véhicule et dissociées dudit dossier. Ces quatre empreintes sont réparties sur les deux cames de sorte que le plot, une fois qu'il a été inséré dans une empreinte creuse des deux cames, place le dossier suivant une inclinaison donnée, chaque empreinte creuse correspondant à une inclinaison différente du dossier. Les deux cames d'un véhicule selon l'invention ne peuvent pas se déplacer l'une par rapport à l'autre et forment une pièce résultante dont la forme globale ne varie pas au cours du temps. Dans le cadre d'un véhicule selon l'invention, le siège arrière peut représenter un siège individuel ou une banquette deux places ou trois places. Une fois que le plot s'est placé dans une empreinte creuse donnée, il constitue un cran de blocage figeant le dossier dans une inclinaison prédéfinie.

Préférentiellement, le dossier est déplacé manuellement en rotation. Le plot est solidarisé au dossier, soit directement, soit par l'intermédiaire d'une pièce d'interface, et ne peut pas se déplacer relativement audit dossier. Ce plot constitue une excroissance du dossier pouvant revêtir toute forme. Avantageusement, les deux cames sont accolées l'une à l'autre pour former une came résultante à deux composantes

Selon une caractéristique possible de l'invention, la pièce d'entrainement est fixée à une zone inférieure du dossier sans possibilité de mouvement par rapport à ladite zone inférieure, chacune des cames présentant une surface supérieure incurvée dans laquelle ont été pratiquées les deux empreintes creuses. Pour cette configuration, la pièce d'entrainement du dossier est placée au-dessus des deux cames, et lorsque le dossier est mis en rotation, le plot balaye les parois supérieures des deux cames jusqu'à parvenir à l'empreinte creuse désirée.

Selon une caractéristique possible de l'invention, les deux cames sont planes et de faible épaisseur, lesdites cames possédant le même contour et les mêmes dimensions, lesdites cames étant placées l'une contre l'autre en étant parfaitement superposées, et présentant une face supérieure incurvée résultante dont la largeur est égale à la somme des largeurs des surfaces supérieures incurvées des deux cames. Pour cette configuration, les deux cames représentent les deux composantes d'une came résultante ayant le même contour, mais ayant une épaisseur deux fois plus élevée que l'épaisseur de l'une des deux cames. Cette came résultante pèse au moins deux fois le poids de chaque came constituant ladite came résultante. L'épaisseur de la came constitue sa dimension considérée le long d'un axe transversal Y du véhicule.

Selon une caractéristique possible de l'invention, le plot possède une longueur qui est supérieure ou égale à la largeur des deux faces supérieures des deux cames. De cette manière, le plot peut indifféremment pénétrer dans les empreintes creuses de l'une ou l'autre des deux cames sans avoir lui-même à être déplacé.

Selon une caractéristique possible de l'invention, les deux cames sont montées pivotantes autour d'un axe de rotation au moyen d'au moins un élément de rappel précontraint ayant tendance par défaut à maintenir lesdites cames dans une position surélevée, et, lors d'une mise en rotation du dossier, le plot a tendance à repousser lesdites cames vers le bas lorsqu'il se déplace le long des faces supérieures de celles-ci avant de s'insérer dans l'empreinte creuse souhaitée. De cette manière, lorsque le dossier est manipulé en rotation, le plot appuie sur les faces supérieures des deux cames en abaissant lesdites cames par rotation, cet abaissement étant obtenu en en produisant un effort qui est supérieur à celui produit par l'élément de rappel précontraint. Une fois que le plot est parvenu à l'empreinte creuse souhaitée de la came concernée, ladite came remonte brutalement sous l'effet de l'élément de rappel précontraint, permettant d'établir une bonne interaction entre ledit plot et ladite empreinte creuse. Le dossier est alors dans la position inclinée souhaitée, avec une bonne stabilité.

Selon une caractéristique possible de l'invention, le véhicule comprend un mécanisme de déverrouillage permettant aux deux cames de s'abaisser afin que le plot puisse sortir de l'empreinte creuse dans laquelle il était inséré, ledit mécanisme comprenant un levier d'actionnement, un fil et une pièce relais montée pivotante autour d'un axe de rotation, le déplacement du levier d'actionnement mettant en rotation la pièce relais via le fil, ledit déplacement induisant un abaissement desdites deux cames sous l'effet de la pièce relais qui exerce une pression sur celles-ci lors de sa mise en rotation. En effet, une fois que le plot est parvenu dans l'empreinte creuse souhaitée, puisque la came concernée a tendance à être repoussé vers le haut sous l'effet de l'élément de rappel précontraint, il ne serait plus possible de faire ressortir facilement ledit plot de ladite empreinte creuse sans une aide extérieure. Cette aide extérieure prend la forme d'un mécanisme permettant de provoquer l'abaissement des deux cames malgré le fait que le plot soit inséré dans une empreinte creuse de l'une des deux cames. Cet abaissement est possible à condition de vaincre l'effort produit par l'élément de rappel précontraint associé à la came. Par défaut, la pièce relais est au contact des deux cames ou à une distance très proche de celles-ci. Ce mécanisme va provoquer une mise en rotation de la pièce relais sous l'effet de l'actionnement du levier qui va provoquer un effort de tension mécanique sur le fil. Une fois que la pièce relais amorce son mouvement de rotation, elle va provoquer par contact une mise en rotation des deux cames dans un sens qui va favoriser un abaissement des surfaces supérieures incurvées. Une fois que les deux cames se sont abaissées, le plot peut alors circuler le long des deux parois supérieures des deux cames.

Selon une caractéristique possible de l'invention, le plot a une forme parallélépipédique et chaque empreinte creuse est de forme parallélépipédique. Ces types de formes permettent d'obtenir une interaction robuste entre le plot et l'empreinte creuse, ledit plot ne pouvant pas sortir facilement de ladite empreinte creuse. Le dossier se retrouve dans une position inclinée très stable.

Selon une caractéristique possible de l'invention, les quatre empreintes creuses sont réparties sur les deux cames de sorte que le dossier du siège arrière puisse occuper quatre positions distinctes : une position verticale, une première position inclinée vers l'arrière à 13°, une deuxième position inclinée vers l'arrière à 25° et une troisième position inclinée vers l'arrière à 33°. Il s'agit d'un mode de réalisation particulier d'un véhicule selon l'invention, mais qui n'est nullement limitatif dans le cadre de la présente invention. Chacune de ces quatre positions inclinées a une fonction bien particulière :
- La position verticale du dossier permet d'agrandir le volume du coffre arrière, tout en servant de butée d'arrêt pour des objets qui seraient stockés dans le coffre arrière,
- La première position inclinée permet d'installer un siège enfant sur le siège arrière,
- la deuxième position inclinée correspond à une position normale du dossier pour une personne qui serait assise sur le siège arrière,
- la troisième position inclinée correspond à une position de confort amélioré pour une personne qui serait assise sur le siège arrière.

Selon une caractéristique possible de l'invention, dans la première position inclinée vers l'arrière à 13° du dossier du siège arrière, un élément à choisir parmi un siège pour enfant et un cosy est fixé sur ledit siège arrière. En effet, une telle inclinaison du dossier est particulièrement adaptée à l'installation d'un siège pour enfant ou un cosy sur le siège arrière d'un véhicule selon l'invention. En revanche, une inclinaison aussi faible du dossier n'est pas adaptée pour assurer un bon confort d'assise à un passager qui serait assis sur le siège arrière.

Selon une caractéristique possible de l'invention, lorsque le dossier est placé dans la position verticale, le dossier du siège arrière permet d'obtenir un volume maximal pour le coffre arrière tout en constituant une butée d'arrêt pour les objets stockés dans ledit coffre arrière, en empêchant ceux-ci d'être projetés dans l'habitacle du véhicule lors d'une phase de décélération brutale du véhicule. En effet, certains objets se trouvant dans le coffre arrière, peuvent présenter des parois verticales. Dans ce cas, ces parois verticales peuvent venir en appui contre le dossier du siège arrière s'étendant verticalement. De plus, lors d'une phase de freinage brutale du véhicule ou lors d'un choc frontal accidentel de celui-ci contre un obstacle extérieur, le dossier du siège arrière, qui est placé dans une position verticale, va pouvoir stopper efficacement les objets placés dans le coffre arrière, en empêchant que ceux-ci soient projetés dans l'habitacle.

Un véhicule selon l'invention présente l'avantage de posséder un siège arrière dont le dossier peut occuper plusieurs inclinaisons discrètes, grâce à un mécanisme judicieux impliquant des pièces de géométrie simple et peu encombrantes. Ce mécanisme a de plus l'avantage d'être sûr et fiable, tout en demeurant léger et d'un fonctionnement aisé et naturel, ne nécessitant aucune force particulière et aucune manipulation contraignantes.

On donne ci-après une description détaillée d'un mode de réalisation préféré d'un véhicule selon l'invention, en se référant aux figures suivantes :
[Fig. 1] La figure 1 est une vue de côté d'un siège arrière d'un véhicule selon l'invention, montrant cinq positions discrètes du dossier dudit siège arrière,
[Fig. 2] La figure 2 est une vue de côté du mécanisme permettant au dossier d'un siège arrière d'un véhicule selon l'invention, d'occuper cinq positions discrètes,
[Fig. 3] La figure 3 est une vue en perspective du mécanisme de la figure 2,
[Fig. 4] La figure 4 est une vue de côté d'un siège arrière d'un véhicule selon l'invention, sur lequel a été installé un siège pour enfant,
[Fig. 5] La figure 5 est une vue de côté d'un siège arrière d'un véhicule selon l'invention, pour lequel le dossier s'étend dans un plan transversal et vertical YZ du véhicule.

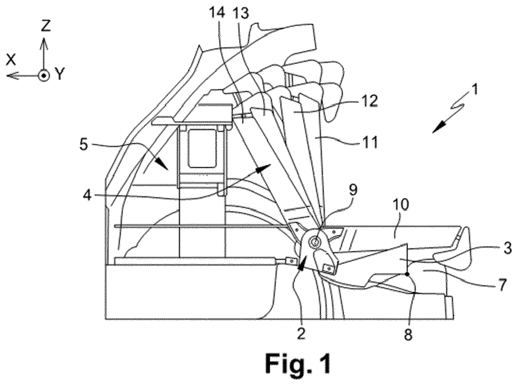

Afin de lever toute ambiguïté, la figure 1 illustre un dossier de siège arrière dans cinq positions différentes.

En se référant à la figure 1, un véhicule 1 selon l'invention comprend une rangée arrière de sièges, située derrière une rangée avant de sièges comprenant un siège passager et un siège conducteur placés l'un à côté de l'autre. La rangée arrière de sièges comprend au moins un siège arrière 2, pouvant être représenté, soit par un siège individuel, soit par une banquette comprenant deux ou trois places. Ce siège arrière 2 comprend classiquement une assise 3 et un dossier 4, et est placé juste devant un coffre arrière 5 dudit véhicule comprenant un bac 6 de roue de secours s'étendant sous un plancher dudit coffre arrière 5. Ce bac 6 de roue de secours délimite un logement cylindrique dans lequel est rangée une roue de secours, ledit bac 6 étant recouvert par une paroi rigide et solide s'étendant dans un plan horizontal XY du véhicule et servant de plancher audit coffre arrière 5. Le coffre arrière 5 est dans la directe continuité du siège arrière 2, de sorte qu'il n'existe aucune paroi ni aucun espace séparant ledit siège arrière 2 dudit coffre arrière 5. Dans certaines configurations, l'assise 3 du siège arrière 2 présente une partie avant 7 qui est montée en rotation autour d'un axe 8 de rotation s'étendant suivant un axe transversal Y du véhicule. La présence de cette partie avant 7 montée en rotation, se justifie par le fait que l'assise 3 du siège arrière 2 ne s'étend pas dans un plan rigoureusement horizontal XY du véhicule mais a tendance à se surélever au niveau de sa partie avant 7. Ainsi, lorsque le dossier 4 dudit siège arrière 2 est complètement rabattu contre ladite assise 3 pour accroitre le volume disponible du coffre arrière 5, il ne s'étend pas non plus dans un plan rigoureusement horizontal. Une telle configuration du dossier peut être nuisible aux objets 30, 31 qui seraient stockés dans le coffre arrière 5, dans la mesure où ceux-ci pourraient glisser sur ledit dossier 4 rabattu demeurant incliné. En faisant pivoter vers l'avant la partie avant 7 de l'assise 3 autour de l'axe de rotation 8, ladite partie avant 7 finie par s'escamoter sous l'assise 3, permettant au dossier 4 de venir s'appuyer sur une assise 3 s'étendant dans un plan horizontal.

Il est à noter que dans certaines configurations, le dossier 4 du siège arrière 2 peut empiéter sur le coffre arrière 5 et réduire son volume disponible.

Le principe d'un véhicule 1 selon l'invention est de posséder un siège arrière 2 dont le dossier 4, qui est monté pivotant autour d'un axe de rotation 9 s'étendant le long d'un axe transversal Y du véhicule, peut occuper plusieurs positions discrètes pour répondre à des besoins spécifiques. Le terme « position discrète » signifie une position parfaitement identifiée et répétitive, qui est marquée par un cran. Autrement dit, lorsque le dossier 4 du siège arrière 2 pivote autour de son axe de rotation 9, il ne peut pas occuper de façon stable n'importe quelle position, mais seulement quelques positions bien identifiées répondant chacune à un besoin particulier.

Bien que ce nombre ne soit pas limitatif dans le cadre de la présente invention, le siège arrière 2 est conçu de manière que le dossier 4 puisse occuper cinq positions discrètes, ce nombre pouvant être augmenté ou réduit en fonction des besoins rencontrés. Ces cinq positions correspondent à une position horizontale 10, à une position verticale 11, à une première position 12 inclinée vers l'arrière de 13° par rapport à la position verticale, à une deuxième position 13 inclinée vers l'arrière de 25° par rapport à la position verticale, et à une troisième position 14 inclinée vers l'arrière de 33° par rapport à la position verticale.

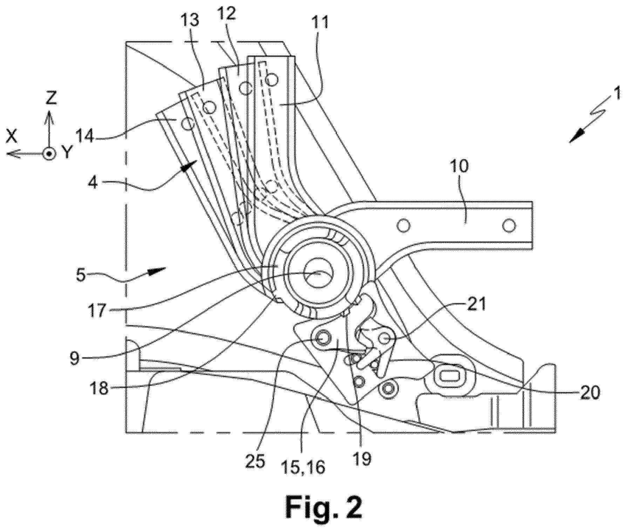

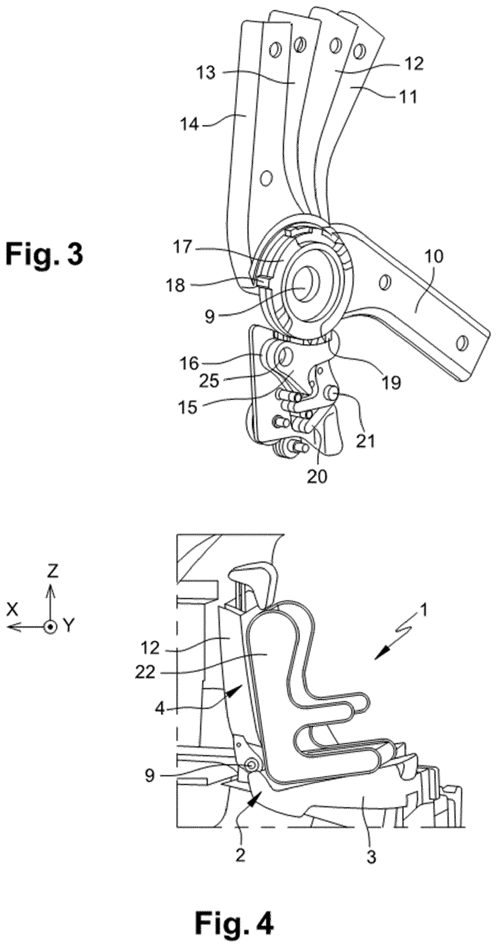

En se référant aux figures 2 et 3, pour parvenir à ce résultat, le véhicule 1 comporte deux cames 15, 16, et une zone inférieure du dossier 4 comporte une pièce d'entrainement 17 interagissant avec lesdites deux cames 15, 16. Nous supposons dans le cas présent, que la position horizontale 10 du dossier 4, c'est-à-dire rabattue contre l'assise 3, n'est pas concernée par cette interaction. La pièce d'entrainement est une roue circulaire 17 qui est traversée en son centre par l'axe de rotation 9 du dossier 4 et qui possède à sa périphérie, un plot 18 de forme parallélépipédique. Cette roue circulaire 17 présente une certaine épaisseur, qui est sa dimension considérée le long de son axe de révolution, lui conférant une forme cylindrique. Le plot 18 est allongé et s'étend sur toute l'épaisseur de la roue circulaire 17. Il saille d'une surface extérieure de la roue circulaire 17 et vers l'extérieur de celle-ci. Ce plot 18 est assimilable à un cran.

En se référant aux figures 2 et 3, les deux cames 15, 16 ont le même contour et sont délimitées chacune par :
- deux surfaces planes et parallèles, ayant la même forme et les mêmes dimensions,
- un bord périphérique joignant lesdites deux surfaces parallèles et matérialisant le contour de la came 15, 16.

Ces deux cames 15, 15 sont accolées l'une à l'autre en étant parfaitement superposées l'une sur l'autre. Autrement dit, une surface plane d'une came 15, 16 est en contact avec une surface plane de l'autre came 15, 16, lesdites deux cames 15, 16 formant une came résultante ayant le même contour que chacune des deux cames 15, 16 et ayant une épaisseur qui est le double de l'épaisseur de chacune de celles-ci. Les deux cames 15, 16 sont montées sur un élément de structure du véhicule qui est complètement dissocié du dossier 4. Chaque came 15, 16 présente une surface supérieure 19 incurvée constituant un secteur du bord périphérique, ladite surface 19 supérieure étant allongée et comportant deux empreintes creuses disposées le long de ladite surface 19 supérieure. Lorsque les deux cames 15, 16 sont solidarisées l'une à l'autre pour former la came résultante, les deux empreintes creuses de la surface 19 supérieure incurvée d'une came 15, 16 sont décalées par rapport aux deux empreintes creuses de la surface 19 supérieure incurvée de l'autre came 15, 16 le long d'un axe longitudinal X du véhicule. De cette manière, le long de la surface supérieure incurvée résultante de la came résultante, on trouve d'un côté deux premières empreintes creuses, et de l'autre côté deux deuxièmes empreintes creuses qui sont décalées par rapport auxdites premières empreintes creuses. Chacune des empreintes creuses est de forme parallélépipédique et possède des dimensions qui sont supérieures à celles du plot 18.

La roue circulaire 17 de la zone inférieure du dossier 4 est disposée juste au-dessus des deux cames 15, 16 de sorte qu'une surface extérieure de ladite roue circulaire 17 vienne tangenter les surfaces 19 supérieures incurvées des deux cames 15 accolées. Les deux cames accolées 15, 16 sont montées dans le véhicule de façon pivotante autour d'un axe de rotation 25, au moyen d'un élément de rappel précontraint ayant tendance par défaut, à maintenir lesdites cames 15, 16 dans une position surélevée.

Lorsque le dossier 4 du siège arrière 2 est mis en rotation manuellement autour de son axe de rotation 9 pour permettre au plot 18 d'atteindre l'une des quatre positions discrètes données, la roue circulaire 17 qui est solidarisée audit dossier 4 en étant traversée par ledit axe de rotation 9, pivote également autour de cet axe de rotation 9 avec la même amplitude. Le plot 18 va alors se déplacer le long des deux surfaces supérieures 19 des deux cames 15, 16 en repoussant lesdites deux cames 15, 16 vers le bas. Cet abaissement des deux cames 15, 16 est effectué par rotation autour de leur axe de rotation 25 et en produisant un effort qui est supérieur à la force déployée par l'élément de rappel précontraint. Dès que le plot 18 a atteint l'empreinte creuse souhaitée appartenant à l'une ou l'autre des deux cames 15, 16, les deux cames 15, 16 vont remonter d'un seul coup, sous l'effet de l'élément de rappel précontraint qui se détend, permettant audit plot 18 de venir occuper étroitement ladite empreinte creuse. Cette surélévation des deux cames 15, 16 est réalisée par rotation autour de leur axe de rotation 25. Le plot 18 inséré dans une empreinte creuse de l'une des deux cames 15, 16 accolées, constitue un cran qui va bloquer le dossier 4 du siège arrière 2 dans l'une des quatre positions discrètes évoquées ci-avant. Le plot 18 est suffisamment long pour qu'il puisse à la fois s'insérer dans les empreintes creuses de l'une des deux cames 15, 16 et les empreintes creuses de l'autre came 15, 16.

Un véhicule 1 selon l'invention comprend un mécanisme de déverrouillage permettant d'abaisser les deux cames accolées 15, 16 afin de libérer le plot 18 de l'empreinte creuse dans laquelle il se trouve. Ce mécanisme de déverrouillage comprend schématiquement un levier d'actionnement, un fil et une pièce relais 20 placée au contact des cames 15, 16 accolées, ou à proximité immédiate de celles-ci. Cette pièce relais 20 est montée en rotation autour d'un axe de rotation 21. Un déplacement manuel du levier d'actionnement met en tension mécanique le fil qui, en étant relié à la pièce relais 20, provoque une mise en rotation de ladite pièce relais 20 autour de son axe de rotation 21. Cette mise en rotation de la pièce relais 20 va engendrer un effort de poussée sur les deux cames 15, 16 provoquée par ladite pièce relais 20 qui est en contact avec celles-ci, cet effort de poussée se traduisant par un abaissement des deux cames 15, 16 accolées, qui vont alors libérer le plot 18 qui était inséré dans une empreinte creuse de l'une desdites cames 15, 16.

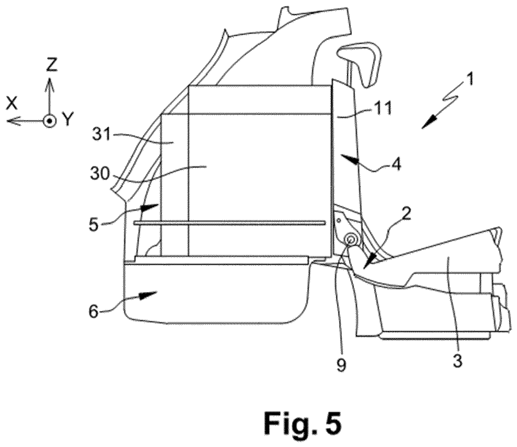

Les quatre positions différentes du dossier 4 rendues possibles par l'interaction entre la pièce d'entrainement 15 et les deux cames 15, 16, correspondent :
- à une position verticale 11, comme cala est illustré à la figure 5. Dans cette position, le dossier 4 du siège arrière a tendance à maximiser le volume disponible du coffre arrière 5 et s'érige en barrière d'arrêt pour les objets 30, 31 qui seraient stockés dans le coffre arrière 5. En effet, le dossier 4 du siège arrière va bloquer lesdits objets 30, 31 en empêchant que ceux-ci ne glissent vers l'avant ou soient projetés vers l'avant, lors d'une phase de décélération brutale du véhicule,
- à une première position 12 inclinée vers l'arrière de 13° par rapport à la position verticale, comme cela est illustré à la figure 4. Pour cette position, qui présente un certain inconfort pour un passager qui serait assis sur le siège arrière 2, un siège 22 pour enfant ou un cosy, peut avantageusement être installé sur le siège arrière 2. Pour rappel, un cosy est un siège en forme de panier à l'usage des bébés ou des enfants en très bas âge,
- à une deuxième position 13 inclinée vers l'arrière de 25° par rapport à la position verticale. Il s'agit d'une position permettant à un passager d'être assis normalement sur le siège arrière 2, avec un certain confort,
- à une troisième position 14 inclinée vers l'arrière de 33° par rapport à la position verticale. Pour cette configuration, le confort du passager qui serait assis sur le siège arrière 2 est maximal.

Il est évident que les positions discrètes du dossier 4 peuvent être supérieures à quatre, en fonction des besoins rencontrés. Pour cela, il suffit de modifier l'emplacement et le nombre d'empreintes creuses sur les deux cames accolées 15, 16.

## Revendications

1. Véhicule (1) comprenant un siège arrière (2) doté d'une assise (3) et d'un dossier (4) monté pivotant autour d'un axe de rotation (9), **caractérisé en ce que** le dossier (4) possède une pièce d'entrainement (17) qui est traversée par l'axe de rotation (9) et comportant une portion périphérique en arc de cercle de laquelle émerge un plot (18), et **en ce que** ledit véhicule comprend deux cames (15, 16) placées l'une à côté de l'autre et possédant chacune au moins deux empreintes creuses, lesdites deux cames (15, 16) étant disposées l'une par rapport à l'autre de sorte que les deux empreintes creuses d'une came (15, 16) soient décalées par rapport aux deux empreintes creuses de l'autre came (15, 16) suivant un axe longitudinal X du véhicule, une mise en rotation du dossier (4) entrainant une mise en rotation simultanée de la pièce d'entrainement (17) permettant au plot (18) de venir s'insérer dans une empreinte creuse de l'une desdites deux cames (15, 16), l'insertion dudit plot (18) dans une empreinte creuse de l'une des deux cames (15, 16) bloquant le dossier (4) dans une position correspondant à une inclinaison donnée.

2. Véhicule selon la revendication 1, **caractérisé en ce que** la pièce d'entrainement (17) est fixée à une zone inférieure du dossier (4) sans possibilité de mouvement par rapport à ladite zone inférieure, et **en ce que** chacune des cames (15, 16) présente une surface supérieure (19) incurvée dans laquelle ont été pratiquées les deux empreintes creuses.

3. Véhicule selon la revendication 2, **caractérisé en ce que** les deux cames (15, 16) sont planes et de faible épaisseur, et **en ce qu'**elles possèdent le même contour et les mêmes dimensions, lesdites deux cames (15, 16) étant placées l'une contre l'autre en étant parfaitement superposées et présentant une face supérieure incurvée résultante dont la largeur est égale à la somme des largeurs des surfaces supérieures incurvées (19) des deux cames (15, 16).

4. Véhicule selon la revendication 3, **caractérisé en ce que** le plot (18) possède une longueur qui est supérieure ou égale à la largeur des deux faces supérieures (19) incurvées des deux cames (15, 16).

5. Véhicule selon l'une quelconque des revendications 2 à 4, **caractérisé en ce que** les deux cames (15, 16) sont montées pivotantes autour d'un axe de rotation (25) au moyen d'au moins un élément de rappel précontraint ayant tendance par défaut à maintenir lesdites cames (15, 16) dans une position surélevée, et **en ce que** lors d'une mise en rotation du dossier, le plot a tendance à repousser lesdites cames vers le bas lorsqu'il se déplace le long des faces supérieures de celles-ci avant de s'insérer dans l'empreinte creuse souhaitée.

6. Véhicule selon la revendication 5, **caractérisé en ce que** le véhicule comprend un mécanisme de déverrouillage permettant aux deux cames (15, 16) de s'abaisser afin que le plot (17) puisse sortir de l'empreinte creuse dans laquelle il était inséré, et **en ce que** ledit mécanisme comprend un levier d'actionnement, un fil et une pièce relais (21) montée pivotante autour d'un axe de rotation (22), le déplacement du levier d'actionnement mettant en rotation la pièce relais (21) via le fil, ledit déplacement induisant un abaissement desdites deux cames (15, 16) sous l'effet de la pièce relais (21) qui exerce une pression sur celles-ci lors de sa mise en rotation.

7. Véhicule selon l'une quelconque des revendications 1 à 6, **caractérisé en ce que** le plot (18) a une forme parallélépipédique et chaque empreinte creuse est de forme parallélépipédique.

8. Véhicule selon l'une quelconque des revendications 1 à 7, **caractérisé en ce que** les quatre empreintes creuses sont réparties sur les deux cames (15, 16) de sorte que le dossier (4) du siège arrière (2) puisse occuper quatre positions distinctes : une position verticale (11), une première position inclinée (12) vers l'arrière à 13°, une deuxième position inclinée (13) vers l'arrière à 25° et une troisième position inclinée (14) vers l'arrière à 33°.

9. Véhicule selon la revendication 8, **caractérisé en ce que** dans la première position inclinée (11) vers l'arrière à 13° du siège arrière, un élément à choisir parmi un siège pour enfant (22) et un cosy est fixé sur ledit siège arrière (2).

10. Véhicule selon la revendication 8, **caractérisé en ce que**, lorsque le dossier est placé dans la position verticale, le dossier (4) du siège arrière (2) permet d'obtenir un volume maximal pour le coffre arrière (5) tout en constituant une butée d'arrêt pour les objets (30, 31) stockés dans ledit coffre arrière (5) en empêchant ceux-ci d'être projetés dans l'habitacle du véhicule lors d'une phase décélération brutale du véhicule (1).
